# EUROPÄISCHE PATENTSCHRIFT

(11) **EP 2 103 955 B1**
(45) Veröffentlichungstag und Bekanntmachung des Hinweises auf die Patenterteilung: **31.12.2014**
(21) Anmeldenummer: 09153571.6
(22) Anmeldetag: 25.02.2009
(51) Int. Cl.: G01S 7/52, G01S 15/12, G01N 29/22, G01N 29/265, G01S 15/89, G01S 15/18

(54) **Einrichtung und Verfahren zur Synchronisation von Ultraschallwandlern in einem Bewegungssystem**
Device and method for synchronising ultrasound convertors in a motion system
Dispositif et procédé de synchronisation de convertisseurs d'ultrasons dans un système de déplacement

(30) Priorität: 20.03.2008 DE 102008015236; 19.01.2009 DE 102009005112
(43) Veröffentlichungstag der Anmeldung: 23.09.2009
(73) Patentinhaber: Siemens Aktiengesellschaft, 80333 München (DE)
(72) Erfinder: Hain, Stefan, 91090 Effeltrich (DE); Mooshofer, Hubert, Dr., 80538 München (DE)

(56) Entgegenhaltungen:
- EP-A1- 1 148 335
- WO-A2-01/71380
- US-A- 5 788 636

## Beschreibung

Die Erfindung betrifft zerstörungsfreie Werkstoffprüfung mit wenigstens einem Ultraschallwandler, der in einem Bewegungssystem relativ zu einem Werkstück verfahrbar ist, wobei Ultraschall-Impulse ausgesandt und Echosignale empfangen werden.

Eine übliche Vorgehensweise zur zerstörungsfreien Werkstoffprüfung mit Ultraschall/US besteht darin, dass die Kontur eines Prüflings mit einem oder mehreren Ultraschallwandlern abgefahren wird, womit ein Abbild des Prüflings mit eventuell gefundenen Fehlern hergestellt wird.

Ultraschallwandler befinden sich dabei an einem Positioniersystem, das üblicherweise von Servomotoren bewegt wird. Deren Betriebsströme werden durch Umrichter über Pulsweitenmodulation/PWM eingestellt. Die Zeitpunkte zur Ausgabe der Pulse und die Auswertung der eingehenden Echos werden vom Positioniersystem gesteuert um die Zuordnung der Signale zum Messort zu erhalten.

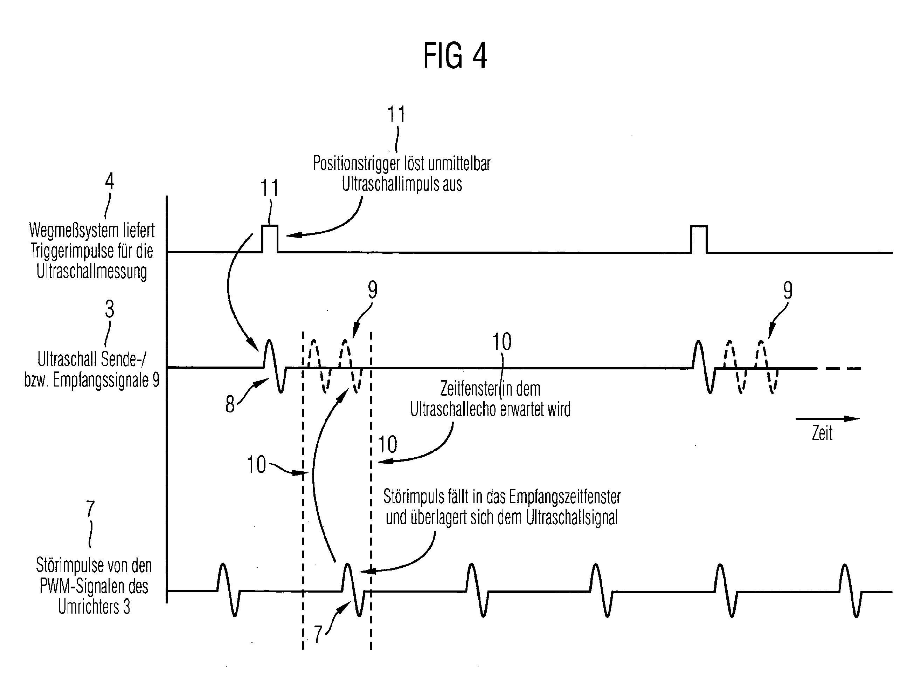

Während die Signalspannung der Ultraschallwandler, hervorgerufen durch die Ultraschallechos, nur einige mV betragen, können die Betriebsspannungen und Ströme der Servomotoren bis einige hundert Volt und einige Ampere betragen. Durch die Pulsweitenmodulation dieser Spannungen und Ströme entstehen steile Schaltflanken auf den Motorzuleitungen, die durch elektromagnetische Kopplung in den Signalkreis von Ultraschallwandlern einkoppeln können. Somit können dort unerwünschte Störspannungen in der gleichen Größenordnung wie die erwünschten Signalspannungen erzeugt und damit das Messergebnis verfälscht werden. Dieser Zusammenhang ist der Fig. 4 zu entnehmen.

Zum Auffinden von Materialfehlern mit unterschiedlicher Orientierung zur Oberfläche wird ein und derselbe Punkt auf der Oberfläche häufig von verschiedenen Ultraschallwandlern mit unterschiedlichen Einschallwinkeln geprüft. Das sequentielle Ansteuern der einzelnen Wandler verlängert die Prüfzeit erheblich.

Die europäische Patentanmeldung EP 1 148 335 A1 offenbart eine Ultraschallprüfvorrichtung zur zerstörungsfreien Fehlerprüfung eines relativ dazu sich bewegenden Werkstückes mit der Ankopplung mittels eines Fließmediums zwischen einem Ultraschallschwinger eines Prüfkopfes und der Werkstücksoberfläche bestehend aus einem Prüfkopfträger, an dem mehrere Ultraschallschwinger mit unterschiedlichen Einschalleinrichtungen so angeordnet sind, dass zur Bildung eines gemeinsamen Prüfortes deren Schallstrahlachsen sich im Bereich des Werkstückes in einem Punkt schneiden. Weiterhin werden die Ultraschallschwinger verschachtelt getaktet betrieben.

Aus der US 5, 788, 636 sind ein Verfahren und ein System bekannt zur Darstellung eines Ultraschallbildes eines Gewebebereiches während gleichzeitig die Abtragung des Gewebes stattfindet, wobei die Anwendung von therapeutischem Strom sequentiell eingesetzt wird mit zumindest der Ultraschalldetektionsphase des Ultraschall-Visualisierungsverfahrens.

Aus der WO 01/71380 A2 sind ein System und ein Verfahren zur Bewerkstelligung, Reduzierung oder Eliminierung von schädlichen Auswirkungen des Betriebes von Energie emittierenden Geräten auf bildgebende Systeme bekannt.

Die der Erfindung zugrundeliegende Aufgabe besteht in der Bereitstellung eines Verfahrens zur Trennung von Ultraschallnutzsignalen und Störsignalen aus Bewegungssystemen.

Die Lösung dieser Aufgabe geschieht durch die jeweilige Merkmalskombination eines Hauptanspruchs.

Vorteilhafte Ausgestaltungen sind den Unteransprüchen zu entnehmen.

Entsprechend der Erfindung werden die Zeitpunkte, zu denen die Ultraschallwandler Pulse aussenden und dann auf das US-Echo warten, nicht unmittelbar oder ausschließlich vom Wegmesssystem einer Positioniereinrichtung bestimmt, sondern zusätzlich relativ zu den Schaltflanken der Pulsweitenmodulations/PWM-Signale von Motorzuleitungen synchronisiert. Damit treffen Echosignale des Ultraschallsystems nicht gleichzeitig mit eingekoppelten PWM-Signalen zusammen, welche für die Ultraschallechosignale Störsignale darstellen.

Dazu notwendige Impulse können entweder direkt aus Umrichter abgeleitet werden oder beispielsweise, falls solche nicht zugänglich sind, auch kapazitiv oder induktiv aus den Motorleitungen ausgekoppelt werden.

Eine Synchronisierlogik und Ablaufsteuerung wertet nun die Impulse des Wegmesssystems und die PWM-Signale aus und steuert durch logische Verknüpfungen und zeitliche Verzögerungen die Ultraschallwandler so an, dass das erwartete Ultraschallecho zu einem Zeitpunkt erwartet wird, in dem keine PWM-Störimpulse auftreten.

Es werden anhand der begleitenden schematischen Figuren Ausführungsbeispiele beschrieben.
- Figur 1: zeigt eine Schaltung mit Umrichter 3, Motor 1, Wegmesssystem 4, Synchronisierung 6 und Ultraschallwandler 2,
- Figur 2: zeigt anhand zweier Ausgestaltungen unterschiedliche Signale mit verschiedenen Sendeund Empfangszeiten,
- Figur 3: zeigt eine Ausgestaltung in der mehrere Störperioden berücksichtigt werden,
- Figur 4: zeigt die bisherigen zeitlichen Verhältnisse ohne Synchronisierung.

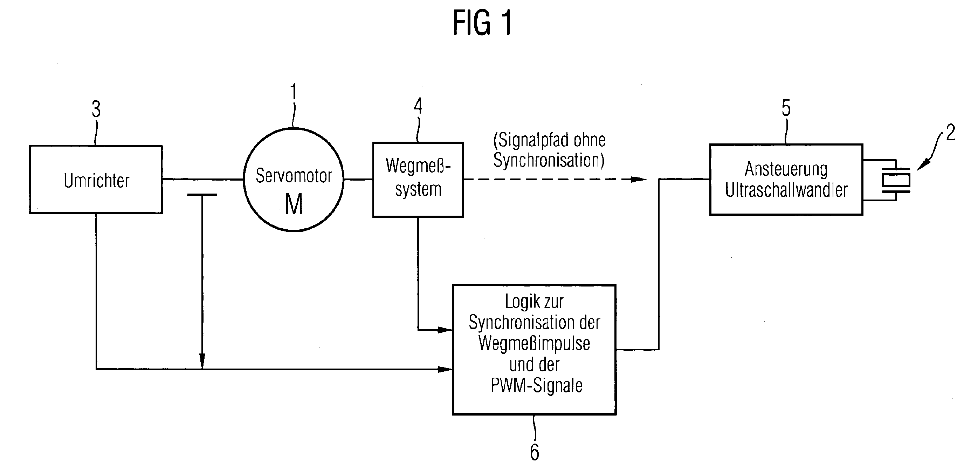

In Figur 1 ist ein Schaltschema dargestellt, wobei Ultraschallwandler 2 von einer Ansteuerung 5 angesteuert werden und zur Abtastung einer bestimmten Werkstoffoberfläche in ein Bewegungssystem integriert sind, indem sie durch Motoren 1 bewegt werden, wobei ein Wegmesssystem 4 diese Bewegung steuert. Ausgehend von bekannten Systemen werden Steuersignale, die ausschließlich vom Wegmesssystem 4 erzeugt werden, ersetzt durch eine kombinierte Ansteuerung basierend auf den Signalen des Wegmesssystems 4 und zusätzlich auf den Schaltflanken der Pulsweitenmodulationssignale, die in den Motorzuleitungen erscheinen.

Figur 4 zeigt eine Signalorganisation, die nach dem bisherigen Entwicklungsstand mit dem störenden Einfluss der Pulsweitenmodulationssignale auf die Ultraschallechosignale verbunden ist. In Figur 4 sind drei unterschiedliche Signale in entsprechend drei Ebenen dargestellt, wobei sich die zeitliche Entwicklung nach rechts erstreckt. Ein Signal, welches als Positionstrigger 11 bezeichnet wird, ist in dem oberen Signalpfad dargestellt. Das Wegmesssystem 4 liefert Triggerimpulse für die Ultraschallmessung. Damit ist eine Zuordnung zwischen einem vorgegebenen Ort auf einer Werkstückoberfläche und einer Messung gegeben. Entsprechend dem Positionstrigger 11 werden Ultraschallsendesignale 8 ausgesandt. Reflektierte Ultraschallechosignale 9 werden zu bestimmten Zeiten erwartet und treffen am Ultraschallwandler nach ihrer Reflexion an der Werkstückoberfläche ein.

Der in Figur 4 unten dargestellte Signalpfad zeigt die Störimpulse 7 entsprechend der Pulsweitenmodulationssignale des Umrichters 3. Wird das Zeitfenster 10, welches durch unterbrochene Linien an zwei Seiten dargestellt ist, zur Orientierung verwendet, so ist feststellbar, dass ein Störimpuls 7 gleichzeitig mit Ultraschallechoimpulsen 9 auftritt, was zu beträchtlichen Störungen des Ultraschallempfangssystems führt. Da das Zeitfenster 10 den Zeitraum skizziert, in dem Ultraschallechos 9 erwartet werden, dient dieses Zeitfenster 10 für weitere Betrachtungen als Orientierungshilfe.

Die durch die Synchronisierung entsprechend der Erfindung entstehende zeitliche Verzögerung der Ultraschallimpulse und damit verbundene Ortsunsicherheit der Messung hinsichtlich der Positionsbestimmung relativ zur Werkstückoberfläche kann bei den üblicherweise auftretenden Bewegungsgeschwindigkeiten und PWM Frequenzen vernachlässigt werden.

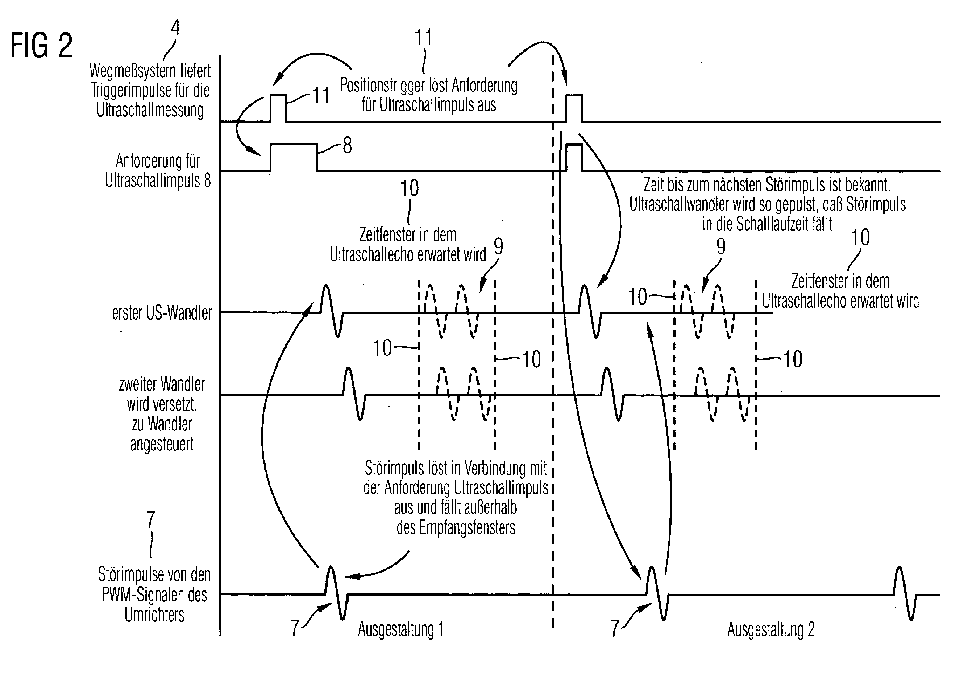

Fig. 2 zeigt auf insgesamt fünf Signalpfaden Folgendes: Von oben nach unten wird zunächst der Positionstrigger 11 des Wegmesssystems 4 dargestellt, der in der zweiten Ebene von oben eine Anforderung für einen Ultraschallimpuls 8 darstellt. Auf der dritten Ebene von oben werden an einem ersten Ultraschallwandler 1 zu beobachtende Störsignale 7 und Ultraschallechosignale 9 dargestellt. In der vierten Ebene von oben werden die Signale eines weiteren Ultraschallwandlers der zeitlich versetzt zum ersten Ultraschallwandler angesteuert wird, skizziert. Auf der untersten Ebene sind die Störimpulse 7 mit den Pulsweitenmodulationssignalen des Umrichters dargestellt.

Figur 2 zeigt insgesamt die Signalorganisation von zwei Ultraschallwandlern 2, die zeitversetzt angesteuert werden. Im linken Teil der Figur 2 ist die Ausgestaltung dargestellt, in der Ultraschallwandler in einem kurzen zeitlichen Abstand Ultraschallsignale aussenden. Diese treffen als Echo kurz nacheinander wieder an den Ultraschallwandlern ein und können getrennt aufgezeichnet werden.

In Figur 2 ist nicht für jeden Ultraschallwandler separat ein Positionstrigger 11 mit einem Ultraschallimpuls 8 vermerkt. Ausgehend von den Störsignalen 7, die zwischen erstem und zweitem Ultraschallwandler zeitversetzt erscheinen, treffen die Ultraschallechosignale 9 in dem entsprechenden Zeitfenster 10 zeitversetzt ein. Diese Lösung ist damit verbunden, dass die Ablaufsteuerung dazu verwendet wird, mehrere Ultraschallwandler zeitlich verschachtelt anzusteuern.

Die in Figur 2 in der rechten Bildhälfte dargstellte Ausgestaltung 2 basiert auf einer bekannten Wiederholfrequenz der Pulsweitenmodulationssignale. In diesem Fall werden mehrere Zeitfenster 10 für Echosignale 9 betrachtet, wobei mehrere Störperioden hintereinander vorliegen. Bei Berücksichtigung mehrerer Störperioden und bei bekannter Frequenz der Störsignale ermöglicht diese Ermittlung einer störungsfreien Zeit, in der gezielt die Ultraschallechosignale 9 in Zeitfenstern 10 auftreten können beziehungsweise erwartet werden können.

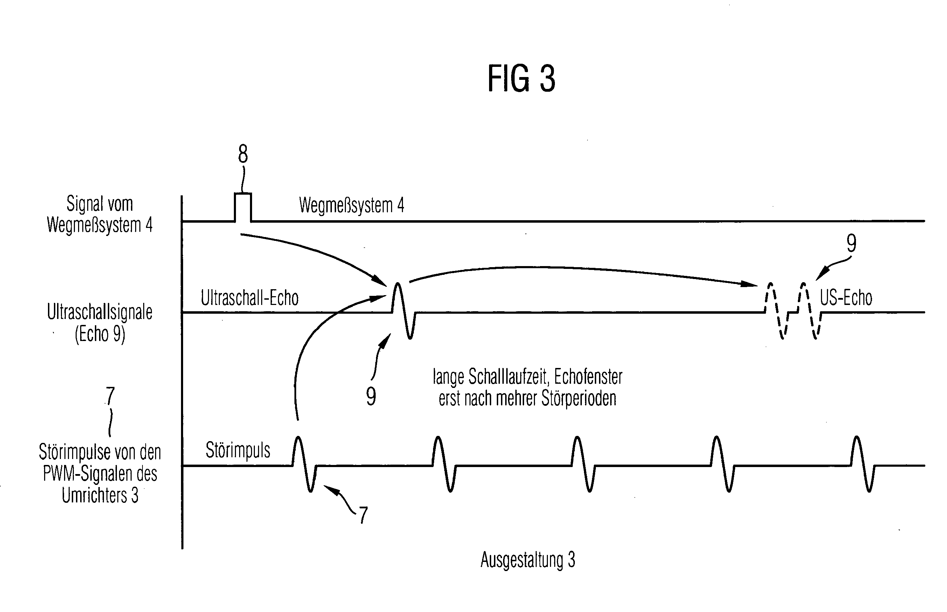

In Figur 3 ist eine dritte Ausgestaltung dargestellt, wobei wiederum bei bekannter Frequenz der Störsignale die zu erwartenden Echosignale unter Berücksichtigung mehrerer Störperioden in störungsfreie Zeiten gelegt werden. Die Besonderheit bei dieser Ausgestaltung liegt in der Einbeziehung einer langen Schalllaufzeit, wobei ein Fenster für Ultraschallechosignale 9 erst nach mehreren Störperioden generiert wird.

Zusätzlich kann die Ablaufsteuerung dazu verwendet werden, mehrere Ultraschallwandler, die einen Punkt aus verschiedenen Richtungen beschallen, zeitlich verschachtelt anzusteuern. Die Wandler senden dann in einem kurzen zeitlichen Abstand Ultraschallimpulse aus. Diese sind einige Zeit gleichzeitig unterwegs und treffen als Echo kurz nacheinander wieder an den Wandlern ein und können getrennt aufgezeichnet werden; siehe Fig. 2, Ausgestaltung 1.

Wenn die Wiederholfrequenz der PWM-Störimpulse bekannt ist, kann die Steuerung auch so erfolgen, dass die Störimpulse auftreten, wenn die Ultraschallimpulse unterwegs sind, aber noch kein Echo erwartet wird; siehe Fig. 2, Ausgestaltung 2.

Wenn die Frequenz der Störsignale bekannt ist, kann ein Zeitfenster für Echosignale unter Berücksichtigung mehrerer Störperioden hinweg in die störungsfreie Zeit gelegt werden; siehe Fig. 3, Ausgestaltung 3.

Durch die Ausblendung der Störimpulse aus dem erwarteten Echosignal kann die Empfindlichkeit der Fehlerdetektion wesentlich verbessert werden und macht im Einzelfall die Unterscheidung zwischen Störimpuls und Fehlerecho erst möglich. Der Aufwand für die Signalverarbeitung und Schirmungsmaßnahmen kann reduziert werden. Durch die verschachtelte Ultraschallwandleransteuerung wird die Prüfzeit reduziert. Die Ansteuerung der Wandler kann vereinfacht werden, indem Sende- und Empfangskanäle mehrfach ausgenutzt werden. Bei Synchronisation der Steuerung auf eine bekannte PWM-Frequenz kann der Messort besser an das ideale Raster hinsichtlich Position und Bewegung angepasst werden und es können auch Messungen bei langen Schalllaufzeiten im Vergleich zur PWM-Periodendauer durchgeführt werden.

## Patentansprüche

1. Verfahren zur zerstörungsfreien Werkstoffprüfung, bei dem mit wenigstens einem Ultraschall-Wandler Ultraschall ausgesandt wird und
- der Wandler mittels eines linearen Bewegungssystems kontinuierlich oder schrittweise bewegt wird,
**dadurch gekennzeichnet, dass**
- die Aussendung von Ultraschall mittels des UltraschallWandlers derart mit der Ansteuerung des Bewegungssystems des Wandlers synchronisiert wird, dass elektrische Störungen durch das Bewegungssystem während der Zeiten auftreten, in denen für vom Wandler ausgesandten Ultraschall kein Echo auftritt und
ein Ultraschallpuls vor dem Auftreten eines Störpulses durch das Bewegungssystem derart ausgesandt wird, dass das Echo des Ultraschallpulses nach dem Störpuls am Wandler eintrifft.

2. Verfahren nach Anspruch 1, bei dem eine durch Synchronisierung generierte zeitliche Verzögerung der Ultraschallimpulse, die eine entsprechend Ortsunsicherheit der Messung hinsichtlich der Positionsbestimmung relativ zur Werkstückoberfläche ergeben kann, bei üblichen auftretenden Bewegungsgeschwindigkeiten und Pulsweitenmodulations-Frequenzen vernachlässigt wird.

3. Verfahren nach einem der Ansprüche 1 oder 2, bei dem bei bekannter Wiederholfrequenz der Pulsweitenmodulations-Störimpulse die Steuerung derart erfolgt, dass die Störimpulse auftreten, wenn die Ultraschallimpulse unterwegs sind, aber noch kein Echo erwartet wird.

4. Verfahren nach einem der Ansprüche 1 bis 3, bei dem bei bekannter Wiederholfrequenz der Pulsweitenmodulationsstörimpulse ein Zeitfenster für Echosignale unter Berücksichtigung mehrerer Störperioden in die störungsfreie Zeit gelegt werden.

## Claims

1. Method for non-destructive materials testing, in which ultrasound is emitted with at least one ultrasonic transducer and
- the transducer is moved continuously or in steps by means of a linear movement system,
**characterised in that**
- the emission of ultrasound by means of the ultrasonic transducer is synchronised with the control of the movement system of the transducer such that electrical interference by the movement system occurs during the times at which no echo is expected for the ultrasound sent out by the transducer and an ultrasonic pulse is emitted before the occurrence of an interference pulse by the movement system such that the echo of the ultrasonic pulse arrives at the transducer after the interference pulse.

2. Method according to claim 1, in which
a time delay of the ultrasonic pulses generated by synchronisation, which can produce a corresponding local uncertainty of the measurement in respect of the positioning system relative to the workpiece surface, can be ignored for usual speeds of movement and pulse width modulation frequencies.

3. Method according to one of claims 1 or 2, in which,
for a known repetition frequency of the pulse width modulation interference pulses, the method is controlled by the interference pulses occurring when the ultrasonic pulses are underway but no echo is expected yet.

4. Method according to one of claims 1 to 3, in which,
for a known repetition frequency of the pulse width modulation interference pulses, a time window for echo signals, taking into account a number of interference periods, is placed in the interference-free time.

## Revendications

1. Procédé d'essai de matériau sans destruction, dans lequel un ultrason est émis par au moins un transducteur ultrasonore et
- le transducteur est déplacé de manière continue ou pas à pas au moyen d'un système de déplacement linéaire, **caractérisé en ce que**
- l'émission d'un ultrason au moyen du transducteur ultrasonore est synchronisée avec la commande du système de déplacement du transducteur de telle sorte que les interférences électriques dues au système de déplacement se produisent dans les intervalles de temps pendant lesquels aucun écho ne se produit pour l'ultrason émis par le transducteur et
une impulsion ultrasonore est émise avant la survenue d'une impulsion d'interférence par le système de déplacement, de sorte que l'écho de l'impulsion ultrasonore arrive au transducteur après l'impulsion d'interférence.

2. Procédé selon la revendication 1, dans lequel un décalage temporel des impulsions ultrasonores généré par synchronisation, pouvant être à l'origine d'une incertitude locale correspondante de la mesure pour ce qui est de la détermination de position par rapport à la surface de la pièce à travailler, est négligé pour les vitesses de déplacement et les fréquences de modulation de largeur d'impulsions habituelles.

3. Procédé selon l'une des revendications 1 ou 2, dans lequel, la fréquence de répétition des impulsions d'interférence de la modulation de largeur d'impulsions étant connue, la commande s'effectue de telle sorte que les impulsions d'interférence se produisent lorsque les impulsions ultrasonores sont en chemin, mais qu'aucun écho n'est encore attendu.

4. Procédé selon l'une des revendications 1 à 3, dans lequel, la fréquence de répétition des impulsions d'interférence de la modulation de largeur d'impulsions étant connue, des fenêtres temporelles pour des signaux d'écho sont établies dans la durée sans interférence en prenant en compte plusieurs périodes d'interférence.
